# EUROPÄISCHE PATENTANMELDUNG

(11) **EP 1 160 357 A1**
(43) Veröffentlichungstag der Anmeldung: **05.12.2001**
(21) Anmeldenummer: 01109292.1
(22) Anmeldetag: 17.04.2001
(51) Int. Cl.: C25B 3/02, C25B 9/00

(54) **Elektrochemische Zelle zur Oxidation organischer Verbindungen und elektrokatalytischer Oxidationsprozess**

(30) Priorität: 30.05.2000 DE 10026940
(71) Anmelder: Creavis Gesellschaft für Technologie und Innovation mbH, 45772 Marl (DE)
(72) Erfinder: Kühnle, Adolf, Dr., 45770 Marl (DE); Duda, Mark, Dr., 67071 Ludwigshafen (DE); Stochniol, Guido, Dr., 63571 Gelnhausen (DE); Tanger, Uwe, Dr., 44879 Bochum (DE); Zanthoff, Horst-Werner, Dr., 45219 Essen (DE)

(57) **Zusammenfassung**

Die Erfindung betrifft eine elektrochemische Zelle, bestehend aus einer Kathode, einem Sauerstoffionen leitenden Festelektrolyt und einer Anode, wobei die Anode eine Beschichtung aus Zeolithen, Mordeniten, Silikaten, Phosphaten oder Mischmetalloxiden mit einer Porengröße unter 200 nm aufweist.

Die Kathode und der Sauerstoffionen leitende Festelektrolyt können aus einem Perowskit, die Anode aus einem Mischmetalloxid bestehen.

Die elektrochemische Zelle kann zur Oxidation organischer Verbindungen verwendet werden.

Bevorzugte Substrate sind organische Verbindungen wie Alkane, Olefine oder Aromaten.

## Beschreibung

Die Erfindung betrifft eine Elektrochemische Zelle und einen elektrochemischen, katalytischen Oxidationsprozess zur Herstellung von selektiv oxidierten organischen Verbindungen.

Die direkte selektive Oxidation organischer Verbindungen war bislang nur in wenigen Fällen möglich, da die partiell oxidierten Produkte meist reaktiver sind als die eingesetzten Edukte, was zur vollständigen Oxidation unter Bildung von Kohlendioxid führt. Insbesondere das Problem der Direktoxidation von Alkanen und Aromaten konnte bis heute noch nicht zufriedenstellend gelöst werden.

Eine Ausnahme stellt die direkte Oxidation von n-Butan zu Maleinsäureanhydrid dar, dabei spielt aber die Stabilisierung des Oxidationsproduktes durch die Ringbildung eine entscheidende Rolle.

Bei der partiellen Direktoxidation nicht-reaktiver organischer Verbindungen konzentrieren sich viele Versuche auf die Entwicklung neuer heterogener Katalysatoren. Dabei ist aber häufig die Ausbeute an dem partialoxidierten Produkt technisch nicht relevant.

Der elektrochemischen Partialoxidation wurde demgegenüber weniger Aufmerksamkeit geschenkt. Auf diesem Gebiet stand, im Gegenteil, die Nutzung der Totaloxidation von geeigneten Verbindungen für die Produktion von elektrischer Energie in Brennstoffzellen im Vordergrund der Entwicklungsarbeit.

Ein Beispiel für die elektrochemische Oxidation von organischen Verbindungen ist in US 4 329 208 anhand der Oxidation von Ethen zu Ethylenoxid beschrieben. Diese Oxidation erfolgt an einer Anode, bestehend aus Silber bzw. einer Silberlegierung mittels eines festen Elektrolytsystems aus Zirkoniumoxiden.

Ein anderes Verfahren zur elektrochemischen Oxidation von organischen Verbindungen ist in US 4 661 422 offenbart. Hier werden Kohlenwasserstoffe an einer Metall/Metalloxid-Anode in einer Salzschmelze als Elektrolyt oxidiert. Die Salzschmelze enthält Carbonat-, Nitrat- oder Sulfatsalze; die Kathode ist aus Mischoxiden von Metallen der Gruppen I B, II B, III A, V B, VI B, VII B und VIII B des Periodensystems aufgebaut.

Takehira et al. haben in Catalysis Today 1995, 25, 371 die partielle Oxidation von Propen in einem Brennstoffzellen ähnlichen Aufbau untersucht. Als Elektrolyt wurde durch Y stabilisiertes ZrO₂ eingesetzt. Als Anodenmaterial diente Au, das ein Mo-Bi-Mischoxid als Katalysator trug, und als Kathodenmaterial Ag. Die Reaktionstemperatur betrug 475 °C.

Die Ausbeute an dem jeweils gewünschten Oxidationsprodukt ist in der Regel so niedrig, dass keines dieser Verfahren technische Relevanz besitzt. Auch hier ist das Problem der Totaloxidation des organischen Substrats zu Kohlendioxid noch nicht gelöst. Zudem wirkt der Elektrolyt als "Sauerstoff-Pumpe", d. h. der für die Oxidation benötigte Sauerstoff wird an der Kathode reduziert, um dann in ionischer Form zu der Anode durch den Elektrolyten zu wandern. Im Anodenraum befindet sich nur das zu oxidierende Substrat und ggf. ein Inertgas. Das Einspeisen von Sauerstoff in den Anodenraum führt nicht zu einer Erhöhung der Ausbeute an dem gewünschten Oxidationsprodukt.

Nachteilig ist auch, dass die Reaktionstemperatur von der Sauerstoffleitfähigkeit des Elektrolyten bestimmt wird. Die eingesetzten Elektrolyten weisen erst bei Temperaturen, die deutlich über den optimalen Temperaturen für solche Oxidationsreaktionen liegen, eine ausreichende Leitfähigkeit auf, was sicherlich zum Teil die geringe Selektivität der untersuchten Verfahren erklärt.

Insbesondere Verfahren, die Salzschmelzen als Elektrolyt einsetzen, weisen zwangsweise so hohe Reaktionstemperaturen auf (bis zu 750 °C), dass eine Zersetzung der Produkte kaum zu vermeiden ist. Verfahren dieser Art sind zur Herstellung thermisch instabiler Verbindungen (z. B. Michael-Systeme) nicht geeignet.

Die Entdeckung des NEMCA-Effektes (Non Faradaic Elektrochemical Modification of Catalytic Activity) eröffnete die Möglichkeit, wirtschaftlichere elektrochemische Verfahren zu entwickeln. Vayenas et. al. beschrieben in "Studies in Surface Science and Catalysis", R. K. Grasselli, S. T. Oyama, A. M. Gaffney, J. E. Lyons (Editors), 110, 77 (1997) und Science (1994), 264, 1563 ein elektrochemisches Verfahren, basierend auf einem leitfähigen, porösen Metall (-oxid) Film auf einem Festelektrolyten wie z. B. Y stabilisierten ZrO₂. Eine gasdichte Abtrennung des Anoden- und Kathodenraumes ist hier nicht mehr notwendig und das Oxidationsmittel kann mit in den Anodenraum eingespeist werden. Es zeigte sich aber, dass das Hauptprodukt der Oxidation, Kohlendioxid, noch immer aus der Totaloxidation des Substrates resultiert und die Selektivität zu einem erwünschten partiell oxidierten Produkt selbst bei geringen Umsätzen sehr niedrig ist.

Aufgabe der vorliegenden Erfindung war die Entwicklung einer elektrochemischen Zelle zur Oxidation von organischen Verbindungen und ein Verfahren zur selektiven Oxidation von organischen Verbindungen mit dieser Zelle.

Überraschenderweise wurde gefunden, dass eine elektrochemische Zelle, bestehend aus einer Kathode, einem Sauerstoffionen leitenden Festelektrolyt und einer mit einer katalytisch wirksamen Verbindung beschichteten Anode hervorragend zur Oxidation von organischen Substraten geeignet ist.

Gegenstand der vorliegenden Erfindung sind daher Elektrochemische Zellen, bestehend aus einer Kathode, einem Sauerstoffionen leitenden Festelektrolyt und einer Anode, wobei die Anode eine Beschichtung aus Zeolithen, Mordeniten, Silikaten, Phosphaten oder Mischmetalloxiden mit einer Porengröße unter 200 nm aufweist.

Die elektrochemische Zelle gemäß der vorliegenden Erfindung kann aus einer ganz oder teilweise aus Mischoxiden gemäß Formel IV oder eine z. B. aus Platin, Gold, Silber, Kupfer, Iridium, Palladium oder Legierungen dieser Metalle bestehenden Anode aufgebaut sein, die zusätzlich mit einer Oberfläche aus undotierten oder mit Metall dotierten Zeolithen, wie z.B. Mordeniten, ZSM-5 oder ZSM-11, ausgerüstet sein kann. Auch Titansilikalite, wie z. B. der TS-1, kommen für die Anodenbeschichtung in Betracht. Derartige katalytisch aktive Materialien sind umfassend in "Technische Katalyse" (Jens Hagen), VCH Verlagsgesellschaft mbH, D-6951 Weinheim, 243-267 (1996), beschrieben. Weiterhin eignen sich als Beschichtung auch amorphe mikroporöse Mischmetalloxide, wie sie z. B. DE 195 06 843 beschreibt. Auch Katalysatoren der Zusammensetzung, die DE 198 54 615 offenbart, mit Metall dotierte Zeolithe, Silikalite, Aluminiumsilikate und Aluminiumphosphate, sind geeignet. Entscheidend in allen Fällen ist, dass die Porengröße dieser Anodenbeschichtungen unterhalb 200 nm, bevorzugt unter 100 nm, insbesondere unterhalb 20 nm, vorzugsweise unterhalb 10 nm, ganz besonders bevorzugt unterhalb 1 nm liegt.

Bevorzugte Anodenbeschichtungen für die erfindungsgemäßen elektrochemischen Zellen können aus einer Verbindung der Formel I

(El₂ Oₑ)_{α} (Fe₂O₃)_{β} SiO₂ (I)

mit
El = Element der 1., 2., 3., 4. oder 5. Hauptgruppe oder 3., 4., 5., 6., 7. oder 8. Nebengruppe des Periodensystems der Elemente
α = 0 bis 0.1
β = 0 bis 0.1
bestehen, mit der Maßgabe, das α und β nicht gleichzeitig 0 sind.

e wird durch die Wertigkeit und die Häufigkeit der von Sauerstoff verschiedenen Elemente der Formel I bestimmt. In einer bevorzugten Ausführungsform gilt: α = 0 bis 7·10⁻² und β = 0.1 bis 10⁻⁵.

Die Anodenbeschichtungen können in Mengen von maximal 300 Gew. % (bezogen auf das Gewicht der Elektrode), insbesondere von maximal 200 Gew. %, vorzugsweise von maximal 100 Gew. % auf die Elektrode bzw. Anode bei Temperaturen von maximal 1500 °C, insbesondere bei Temperaturen von maximal 900 °C, vorzugsweise bei Temperaturen von maximal 750 °C aufgesintert werden. Entscheidend ist die Temperaturstabilität der Beshichtungen. So verhalten sich z. B. Zeolithe selbst bei Temperaturen von über 1000 °C weitgehend stabil. Man kann die Beschichtungen aber auch auf eine Elektrode aufwachsen bzw. aufkristallisieren lassen. Geeignet ist hierbei das Aufkristallisieren der gewünschten mesoporösen, mikroporösen bzw. nanoporösen katalytisch wirkenden Schicht auf eine Elektrode. Hierzu kann man analog der Kristallisation von z.B. einer Zeolithschicht auf der Oberfläche eines Trägers verfahren (US 4,800,187).

Eine weitere Möglichkeit zur Kristallisation von z.B. einer Zeolithschicht auf der Oberfläche eines mesoporösen Trägers bzw. im vorliegenden Fall einer Elektrode bzw. Anode bildet die Kristallisation von Zeolithpfropfen innerhalb der Poren eines monolithischen Trägers (US 4,699,892, FR 94-5562, WO 95 29 751).

Mit den erfindungsgemäßen elektrochemischen Zellen bzw. dem erfindungsgemäßen Verfahren können organische Verbindungen, z.B. gesättigte Systeme wie Ethan, Propan, Isobutan, Butan, Hexan, Pentan, Cyclohexan, Vinylcyclohexan, Octan und Cyclododecan, oder Dreifachbindungen enthaltende Verbindungen wie z. B. Ethin, Propin oder Butin oxidiert werden. Durch die Einspeisung von Kohlenwasserstoffen auf der Eduktseite kann auch Synthesegas, also Wasserstoff plus Kohlenmonoxid hergestellt werden.

Weiterhin lassen sich Olefine bzw. Doppelbindungen enthaltendene Verbindungen und Aromaten wie z. B. Ethen, Propen, Buten, Isobuten, Hexen, Cyclohexen, Vinylcyclohexen, Cycloocten, Cyclododecen, Butadien, Isopren, Pentadien Hexadien, Cyclooctadien, Cyclododecatrien sowie Benzol, Toluol, ortho-Xylol, meta-Xylol, para-Xylol, Cumol, Cumylbenzol, Cyclododecylbenzol, 2n-Butylbenzol, Ethylbenzol, tert.-Butylbenzol, tert.-Butyltoluol, Methoxytoluol und Phenoxytoluol oder deren Derivate zu den entsprechenden Epoxiden, Hydroxyverbindungen, Aldehyden und Ketonen sowie Carbonsäuren oxidieren.

Alkohole, Ketone und Aldehyde lassen sich zu den entsprechenden Aldehyden bzw. Carbonsäuren, gegebenenfalls unter Kettenspaltung, selektiv überführen. Beispiele hierfür sind unter anderem Trimethylcyclohexanol (aus Trimethylcyclohexan), Cyclododecanol (aus Cyclododecan), Acrolein (aus Propan oder Propen), Methacrolein (aus Isobutan oder Isobuten) und Cyclododecanon (aus Cyclododecan).

In der elektrochemischen Zelle nach der Erfindung wird durch die Kathode Sauerstoff aufgenommen und durch den Festelektrolyten zur Anode geleitet. Die Kathode kann auch einem Luftstrom oder einem Sauerstoff enthaltenden Abgasstrom ausgesetzt werden. Wichtig ist, dass in diesem Gasstrom ein dissoziativ zerlegbares Gas wie Sauerstoff enthalten ist, das durch den Festelektrolyten zur Anode wandern kann.

Die zu oxidierende organische Verbindung kann mit Luft und/oder Sauerstoff und/oder einem Inertgas wie z. B. Stickstoff versetzt und an der Anode vorbeigeleitet werden.

Die zu oxidierende organische Verbindung kann gasförmig oder flüssig eingespeist werden, jedoch hat sich bei den erfindungsgemässen Reaktionstemperaturen eine gasförmige Einspeisung bewährt.

So ist es auch möglich, Benzol oder Benzolderivate, zusammen mit Distickstoffmonoxid und/oder mit Distickstoffmonoxid enthaltender Luft oder Sauerstoff oder einem sonstigen, Distickstoffmonoxid enthaltenden Abgas z. B. aus der Adipinsäuresynthese, in der erfindungsgemäßen elektrochemische Zelle zu oxidieren, um Phenol oder dessen Derivate herzustellen.

Gegenstand der vorliegenden Erfindung ist auch ein Verfahren zur elektrochemischen Oxidation von organischen Verbindungen, wobei die organischen Verbindungen an der Anodenseite einer elektrochemischen Zelle, bestehend aus einer Kathode, einem Sauerstoffionen leitenden Festelektrolyt und einer Anode, die eine Beschichtung aus Zeolithen, Mordeniten, Silikaten, Phosphaten oder Mischmetalloxiden mit einer Porengröße unter 200 nm aufweist, und an der Kathodenseite ein Sauerstoff oder N₂O enthaltendes Gas vorbeigeleitet wird.

Für die Leitfähigkeit der elektrochemischen Zelle ist die Beschaffenheit des Sauerstoffionen leitenden, festen Elektrolyten entscheidend. Sowohl durch die Art der Zusammensetzung als auch durch die Geometrie und insbesondere die Schichtdicke des Festelektrolyten lässt sich die Leitfähigkeit drastisch erhöhen. Günstig sind Schichtdicken unterhalb 200 µm, bevorzugt unterhalb 150 µm, ganz besonders bevorzugt unterhalb von 60 µm.

Der Sauerstoffionen leitende Festelektrolyt der erfindungsgemäßen elektrochemischen Zelle kann aus Ceroxid oder oder mit Lanthanoxid (La₂O₃), Yttriumoxid (Y₂O₃), Ytterbiumoxid (Yb₂O₃) und/oder Gadoliniumoxid (Gd₂O₃) stabilisiertem Ceroxid (CeO₂) bestehen. Weiterhin ist es möglich, einen Festelektrolyten, bestehend aus Zirkonoxid oder mit Calciumoxid (CaO), Scandiumoxid (Sc₂O₃), Yttriumoxid (Y₂O₃) und/oder Ytterbiumoxid (Yb₂O₃) stabilisiertem Zirkonoxid (ZrO₂) einzusetzen. Im einfachsten Fall enthält der Sauerstoffionen leitende Festelektrolyt ein Metall oder ein Metalloxid bzw. komplexe Mischmetalloxide, wie im Folgenden noch gezeigt wird.

Neben der Zumischung von Metallpulvern oder -flocken, z.B, Kupfer, Silber, Gold, Platin, Palladium und Iridium, zum Festelektrolyten ist es weiterhin möglich, eine Metallfolie, bevorzugt eine für Sauerstoff durchlässige Metallfolie zwischen Elektrolyt und Anode anzuordnen. Derartige Metallfolien bestehen aus einem Metall hoher elektrischer Leitfähigkeit wie Kupfer, Silber, Gold, Platin, Palladium, Iridium oder aus einer Mischung dieser Metalle. Die Schichtdicke dieser Metallfolien ist unterhalb 200 µm, bevorzugt unterhalb 100 µm, ganz besonders bevorzugt unterhalb von 50 µm.

Die Schichtdicke des Festelektrolyten lässt sich durch verschiedene Methoden einstellen bzw. die Leitfähigkeit kann günstig beeinflusst werden durch beispielsweise CVD (= chemical vapour deposition), PVD (= physical vapour deposition), Spin-Rotation oder MOD-Spin-Casting [Swider, Karen Elizabeth. Univ. Pennsylvannia, Philadelphia, PA, USA. Avail. Univ. Microfilms Int., Order No. DA9308667. (1992); 242 PP: From: Diss. Abstr. Int. B 1993, 53(11), 5927], Tape-Casting (= Folien-Giessen) [Plucknett, Kevin P.; Caceres, Carlos H.; Wilkinson, David S.; Department Materials Science Engineering, McMaster University, Hamilton, ON, Can.; J. Am. Ceram. Soc. (1994), 77(8), 2137-44], Slip-Casting [Forthmann, R.; Blass, G.; Buchkremer, H.-P. Forschungszentrum Julich GmbH, Julich, Germany. Editor(s): Sarton, L.A.J.L.; Zeedijk, H.B.; Mater., Funct. Des., Proc. Eur. Conf. Adv. Mater. Processes Appl., 5^{th} (1997), 3 3/271-3/274. Publisher: Netherlands Society for Materials Science; Zwijndrecht, Neth.] oder speziell auch durch die MOCVD-Methode (= Metal-Organic Chemical Vapor Deposition). Diese Methodik gestattet durch Zersetzung auf einem porösen Untergrund zu Membranstärken bzw. im vorliegenden Fall auf Elektrolyt-Schichtdicken zwischen 1 µm und 50 µm zu kommen. Die Methodik haben beschrieben [O. Gorbenko, A. Kaul, A. Molodyk, V. Fuflygin, M. Novozhilov, A. Bosak, U. Krause, G. Wahl in "MOCVD of perovskites with metallic conductivit", Journal of Alloys and Compounds, 251 (1997), 337-341]. Experimentelle Probleme wie stöchiometrische Abweichungen, Verlust von Alkali- und Erdalkaliverbindungen im Film und die Bildung von Crackprodukten können durch geeignete Wahl der Ausgangsstöchiometrie und durch Wahl der Zersetzungsbedingungen gelöst werden.

Als Untergründe bzw. Substrate für diese Membran- bzw. Elektrolytschichten eignen sich Aluminiumoxid (Al₂O₃), Lanthancalciummanganat (La₁₋ₓCaₓMnO₃) und mit Calcium stabilisiertes Zirkonium (Zr₁₋ₓCaₓO₂).

In einer besonderen Ausführungsform der vorliegenden Erfindung wird als Sauerstoffionen leitender Feststoff ein Perowskit der allgemeinen Formel II

LnₐX¹ _{b}X² _{c}X³ _{d}Oₑ (II)

mit
Ln = La Ce, Pr, Nd, Pm, Sm, Eu, Gd, Tb, Dy, Ho, Er, Tm, Yb und/oder Lu
X¹ = Ca, Sr, Ba, und/oder Mg
X² = Ga, Al, Mn, Ti, Nb, Y, W und/oder Zr
X³ = Fe, Co, Ni und/oder Cu
a = 0,1 bis 0,9,
b = 0,1 bis 0,9,
c = 0 bis 0,9,
d = 0 bis 0,9
mit der Maßgabe, dass a+b = 0,3 bis 1,5, eingesetzt.

Die Anzahl der Sauerstoffatome e wird durch die Wertigkeit und die Häufigkeit der von Sauerstoff verschiedenen Elemente dieser Formel bestimmt.

In einer weiteren Ausführungsform wird als Sauerstoffionen leitender Feststoff eine Pyrochlorverbindung der allgemeinen Formel III

(Ln_{f}X⁴ _{g})₂(X⁵ ₕX⁶ ᵢ)₂Oₖ (III)

mit
Ln = La, Ce, Pr, Nd, Pm, Sm, Eu, Gd, Tb, Dy, Ho, Er, Tm, Yb und/oder Lu
X⁴ = Na, Mg, Ca und/oder Sr,
X⁵ = Ti, Nb, Ta und/oder Zr,
X⁶ = Fe, Al, Sc, Ga und/oder Y,
f = 0,2 bis 1,2,
g = 0 bis 0,8,
h = 0,2 bis 1,2
i = 0 bis 0,8,
verwendet.

Die Anzahl der Sauerstoffatome k ist wieder durch die Wertigkeit und die Häufigkeit der von Sauerstoff verschiedenen Elemente dieser Formel bestimmt.

Diese Verbindungen können z. B. mittels Sol-Gel-Verfahren [Shao Zonping; Sheng, Shishan; Chen, Hengrong; Li, Lin; Pan, Xiulian; Xiong Guoxing; State Key Laboratory of Catalysis, Dalian Institute of Chemical Physics, Chinese Academy of Science, Dalian, Peop. Rep. China. Gongneng Cailiao (1998), 29(Suppl), 1091-1093, 1096], Sprühtrocknung [Sizgek, E.; Bartlett, J.R.; Brungs, M.P. Materials Division, Australian Nuclear Science and Technology Organisation, Menai, Australia. J.Sol-Gel Sci.Technol. (1998), 13(1/2/3), 1011-1016) oder "drip pyrolysis" [P. Gordes et al., Den. J. Mater. Sci. (1995), 30 (4), 1053-8] oder Zersetzungsmethoden [z. B.: N. Dhas et al., India J. Mater. Chem. (1993), 3 (12), 1289-1294, oder D. Fumo et al., Port. Mater Res. Bull. (1997), 32 (10), 1459-1470] hergestellt werden.

Als Anodenmaterial bzw. als Anodenbeschichtung, d. h. als katalytisch wirkende Schicht eignet sich auch ein Mischoxid der allgemeinen Formel IV

AₗBₘX⁷ ₙX⁸ ₒX⁹ ₚX¹⁰ _{q}X¹¹ ᵣX¹² ₛOₜ (IV)

mit
A, B: Element der 1., 2. und/oder 5. Hauptgruppe und/oder der 4., 5., 6., 7., 8. Nebengruppe des Periodensystems der Elemente
X⁷ = V, Nb, Cr, W, Ta, Ga, und/oder Ce
X⁸ = Li, Na, K, Rb, Cs, Be, Mg, Ca, Sr und/oder Ba,
X⁹ = La, Ce, Pr, Nd, Pm, Sm, Eu, Gd, Tb, Dy, Ho, Er, Tm, Yb, Lu, Cu, Ag, Au, Pd und/oder Pt,
X¹⁰ = Fe, Co, Ni und/oder Zn,
X¹¹ = Sn, Pb, Sb und/oder Te,
X¹² = Ti, Zr, Si und/oder Al, wobei
l = 0,001 bis 30,
m = 0,001 bis 20,
n = 0 bis 15,
o = 0,001 bis 10,
p = 0 bis 10
q = 0 bis 40
r = 0 bis 10 und
s = 0 bis 80 mit der Maßgabe, dass 1+m ≥ 0,01 und 1+o ≥ 0,005 ist.

Die Anzahl der Sauerstoffatome t wird durch die Wertigkeit und die Häufigkeit der von Sauerstoff verschiedenen Elemente dieser Formel bestimmt.

Die Bezeichnung "Mischoxide" im Sinne der vorliegenden Erfindung bezieht Multimetalloxidmassen als nebeneinander vorliegende Metalloxide ein. In jedem Falle sind, abhängig von Stöchiometrie und Temperaturbehandlung der Mischoxide, Phasenausscheidungen möglich.

Mischoxide des oben genannten Typs sind aus einem anderen technischen Gebiet bekannt und werden z. B. als heterogene Katalysatoren für Gasphasenreaktionen eingesetzt. Die Herstellung und die Verwendung dieser Verbindungen kann z. B. in EP 0 417 723 nachgelesen werden.

Die Verwendung von Mischoxiden dieses Typs als heterogene Katalysatoren ist in stromlos ablaufenden chemischen Reaktionen bekannt; der erfindungsgemäße Einsatz als Anodenmaterial in elektrochemischen Prozessen ist in der Literatur nicht beschrieben.

Für elektrochemische Prozesse sind unter anderem beispielsweise folgende Mischoxide geeignet:
a) Mo _{9,57} Bi _{0,86} Fe _{6,4} Co _{3,2} K _{0,05} Oxid
b) Mo ₁₂ Bi _{0,5} Fe ₄ Co ₈ Ca _{0,1} K _{0,1} Oxid
c) Mo ₁₂ Bi ₅ Fe ₄ Co ₈ Ca _{0,1} K _{0,1} Oxid
d) Mo ₁₂ Bi _{0,98} Ni _{8,29} Fe _{1,95} Si ₁₀ K _{0,05} Na _{0,15}Oxid
e) Mo ₁₂ Bi ₄ Si ₃₆ Ni ₃ Co _{1,9} Cu _{0,26} Fe _{0,1} Oxid
f) Mo ₁₂Bi₄Si₃₆Ni₃ Fe _{1,9} Cu _{0,26} Co _{0,1} Oxid

Man findet auch Summenformelangaben der genannten Mischoxide, die kleinere Indizes in der Summenformel besitzen. Beispielweise kann das Mischoxid c) = Mo ₁₂ Bi₅ Fe₄ Co₈ Ca_{0,1} K_{0,1} Oxid durch die Zahl 12 geteilt werden. Danach ergibt sich das mit oben genannter Summenformel c) identische Produkt:

Mo Bi _{0,416} Fe_{0,33} Co_{0,66} Ca _{0,083} K _{0,083} Oxid

Das bedeutet, dass in vielen Fällen nur das Verhältnis der darin enthaltenen Komponenten eine eindeutige Aussage zulässt.

Die Anode kann ganz oder teilweise aus den Mischoxiden der Formel IV bestehen. In der Regel kann auch eine bestehende Elektrode, z. B. aus Platin, Gold, Silber, Kupfer, Iridium, Palladium oder Legierungen dieser Metalle, mit einer Oberfläche aus diesen Mischoxiden ausgerüstet werden. Es ist ebenfalls möglich, die katalytisch wirkende mesoporöse, mikroporöse bzw. nanoporöse katalytisch wirkende Anodenbeschichtung direkt auf eine metallische Elektrode aufzusintern oder aufkristallisieren zu lassen.

Ebenfalls ist es möglich, dem Anodenmaterial - wenn z.B. Mischoxide enthalten sind - zur Verbesserung der Leitfähigkeit ein leitfähiges Metall wie beispielsweise Kupfer, Silber, Gold, Platin, Palladium oder Iridium mechanisch zuzumischen. Da sich reine Metalle beim Sinterprozess jedoch chemisch verändern können, mischt man dem Anodenmaterial häufig mechanisch den Festelektrolyten gemäß den Formeln II oder III zu, vorzugsweise einen Perowskit oder Ceroxid, die man zweckmäßigerweise stabilisiert.

In der Praxis hat es sich bewährt, zunächst einen Film aus den Mischoxiden mittels Siebdrucktechnik auf den Elektrolyten aufzutragen und durch einen Temperschritt zu verbinden. Ein Beispiel für diese Technik findet sich in JP 09 239 956.

Als Kathode kann im erfindungsgemässen Verfahren ein Metall wie Kupfer, Gold Silber, Platin, Iridium oder Mischungen dieser Metalle eingesetzt werden.

Weiterhin können als Kathode ein oder mehrere Metalloxide oder ein Mischmetalloxid eingesetzt werden. Die Bezeichnung "Mischoxide" im Sinne der vorliegenden Erfindung bezieht Multimetalloxidmassen als nebeneinander vorliegende Metalloxide ein. In jedem Falle sind, abhängig von Stöchiometrie und Temperaturbehandlung der Mischoxide, Phasenausscheidungen möglich.

Darüber hinaus kann die Kathode aus Perowskiten der allgemeinen Formel V

LaᵤX¹³ ᵥX¹⁴ _{w}X¹⁵ ₓX¹⁶ _{y}O_{3±z} (V)

mit
X¹³ = Ce, Pr, Nd, Pm, Sm, Eu, Gd, Tb, Dy, Ho, Er, Tm, Yb und/oder Lu,
X¹⁴ = Ca, Sr, Ba und/oder Mg,
X¹⁵ = Mn, Fe, Ti, Ga, Mn und/oder Zr,
X¹⁶ = Co, Ni, Cu, Al und/oder Cr
u = 0 bis 1,2,
v = 0 bis 1,0
w = 0,01 bis 0,8,
mit der Maßgabe, dass u+v+w ≤ 1,5
x = 0,2 bis 1,3,
y = 0 bis 0,9,
mit der Maßgabe, dass x+y ≥ 0,3
bestehen.

Die Anzahl der Sauerstoffatome (3±z) wird durch die Wertigkeit und Häufigkeit der von Sauerstoff verschiedenen Elemente definiert.

In DE-PS 197 02 619 C1 wird die Herstellung nicht stöchiometrischer Perowskite der Formel L_{α}M_{β}Mn_{χ}Co_{δ}O₃ als Kathodenmaterial für Hochtemperatur-Brennstoffzellen beschrieben. Brennstoffzellen sind jedoch für einen anderen technischen Prozess, nämlich der Produktion von elektrischer Energie unter Totaloxidation eines Substrats entwickelt worden.

Die elektrochemische Oxidation von organischen Verbindungen gemäß dem erfindungsgemässen Verfahren bzw. in der erfindungsgemässen Zelle wird bei erhöhten Temperaturen, bevorzugt 100 bis 650 °C, besonders bevorzugt 200 bis 550 °C durchgeführt.

Die Anwendung von erhöhten Drücken ist ebenfalls möglich; es können Drücke von maximal 100 bar, bevorzugt 1 bis 20 bar, ganz besonders bevorzugt 10 bar angelegt werden.

Beim erfindungsgemässen Verfahren bzw. der elektrochemischen Zelle wird einerseits Sauerstoff an der Kathode in eine ionische Form überführt und durch den Elektrolyten zu der Anode geleitet und andererseits an der Anode so aktiviert, dass eine Reaktion mit der hieran vorbei geführten organischen Verbindung erfolgt. Dabei kann die Einspeisung des Sauerstoff auch durch einen porösen, nicht gasdichten Festelektrolyten erfolgen. Der Gasstrom im Anodenraum kann außer der zu oxidierenden organischen Verbindung und Sauerstoff auch noch ein Inertgas enthalten.

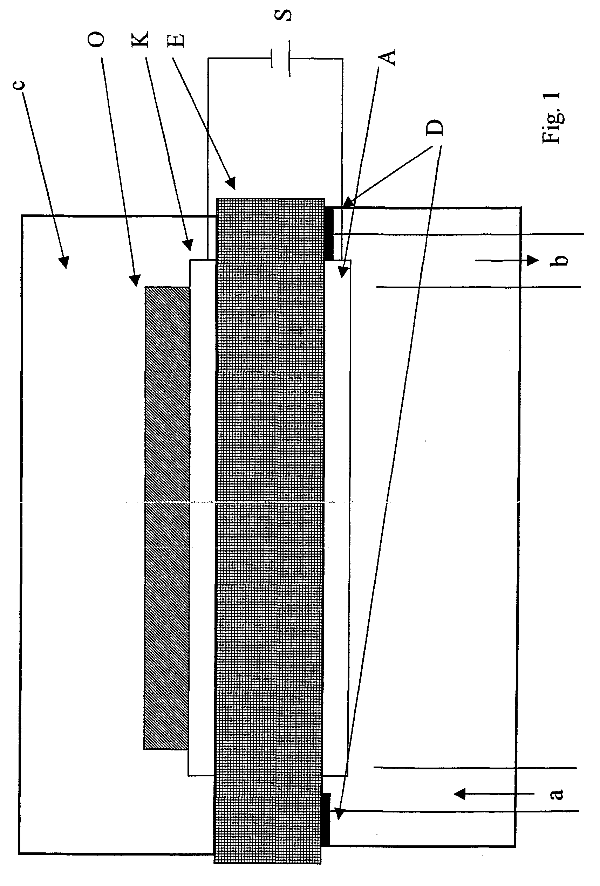

Ein exemplarischer Aufbau einer erfindungsgemäßen elektrochemischen Zelle zur Ausführung des erfindungsgemässen Verfahrens ist in Figur 1 dargestellt.

Die Kathode K und die Anode A sind auf dem Sauerstoffionen leitenden Elektrolyten E aufgebracht. Hier ist auf eine Strom leitende Verbindung der Materialien, z. B. durch Tempern, zu achten. Die beiden Elektroden werden über die Spannungsquelle S mit Strom versorgt.

Edukt und Sauerstoff werden als Gasstrom a) auf die Anode A geleitet, das resultierende Produktgas b) wird entweder durch den Druck des Gasstroms a) oder mittels eines entsprechenden Unterdrucks abgeführt. Der Gasstrom c) auf der Kathodenseite kann aus Luft, Sauerstoff oder einem sonstigen sauerstoffhaltigen Gasgemisch bestehen und wird - abgereichert an Sauerstoff- abgeführt.

Der Anodemraum ist durch Goldfolien D gegen die Elektroden abgedichtet. Die Sauerstoffzufuhr (ca. 10 kPa) erfolgt über den porösen Körper O.

Die räumliche Anordnung von Anode, Kathode und Elektrolyt ist nicht auf ebene Platten oder durchgehende Schichten beschränkt. Es ist auch möglich, Rohrreaktoren für das erfindungsgemässe Verfahren einzusetzen. Hier werden entweder Anoden- und Kathodenmaterialien auf ein Rohr aus dem Elektrolyten aufgebracht. Die nötigen Stromzuführungen sind entsprechend anzupassen.

Weiterhin können Anoden- oder Kathodenschicht als Gewebe oder strukturierte Oberflächenschicht mit regelmäßigen Vertiefungen oder Erhebungen ausgelegt sein.

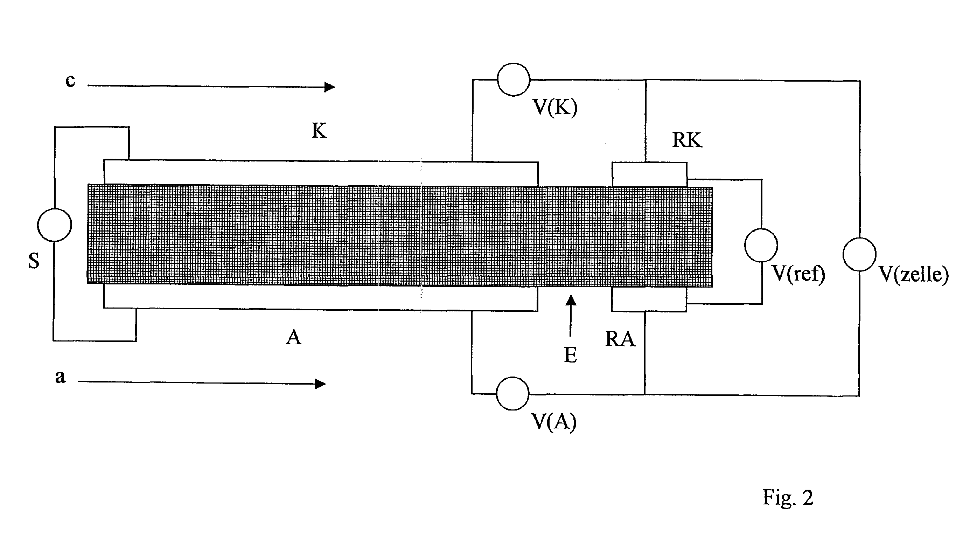

Um den Einfluss der Temperatur, des Stromflusses bzw. der Stromstärke, die von der Größe bzw. Produktionskapazität der elektrochemischen Zelle abhängig ist und in der Regel zwischen 0 und 10 mA, vorzugsweise bei 10 bis 20 mA liegt und die Verweilzeit zu ermitteln bzw. zu optimieren, ist die in Fig. 2 schematisch dargestellte Versuchsanordung geeignet.

Als Testapparatur kann beispielsweise eine für unterschiedliche Stromflüsse programmierbare Stromquelle S, die bei einer Stromstärke von - 100 bis + 100 mA arbeitet, verwendet werden. Verfolgt werden die Überspannung an der Anode A (V_{A}), die Überspannung an der Kathode K (V_{K}), die Messzellenspannung V_{Zelle} und die Spannung Vₖ, V_{A} gegen die Referenzelektroden RA, RK, die üblicherweise aus Platin hergestellt sind.

Die hier genannten Stromstärken beziehen sich auf Versuchsanlagen wie z. B. die in Fig. 2 gezeigte. Bei größeren Produktionskapazitäten sind entsprechend höhere Stromstärken erforderlich, die unschwer durch orientierende Versuche zu ermitteln sind.

In Fig. 2 bedeutet E Sauerstoffionen leitender Festelektrolyt, a) Eduktgasstrom (Benzol → Phenol) c) Sauerstoff oder sauerstoffhaltiges Gas.

Die nachfolgenden Beispiele sollen die Erfindung näher erläutern, ohne ihren Umfang zu beschränken.

### Beispiele:

### Schritt a): Herstellung des Sauerstoffionen leitenden Festelektrolyten

aa) Entweder wird handelsübliches Ceroxid (Fa. Indec b.v.) verwendet;
ab) oder mit den gewünschten Verbindungen wird eine Suspension, die ein Bindemittel (z.B. 16 g Ethylcellulose, Fa. Merck) und ein Lösemittel (z.B. 422 g Terpineol, d.h. p-Menth-1-en-8-ol) enthält, hergestellt. Dies kann beispielsweise mit einer Kugelmühle bzw. Perlmühle (Fa. Netzsch) bei einer Mischzeit von 24 Stunden erfolgen. Mit dieser Suspension wird durch Foliengiessen ein dicker Film erzeugt, der nach Abziehen bzw. Verdunsten des Lösemittels eine Rohfolie des Elektrolyten ergibt. Durch Schneiden wird dieser in die gewünschte Größe gebracht.

Generell hat sich herausgestellt, dass je nach verwendetem Elektrolyt (in den vorliegenden Versuchen wurde La_{0,8}Sr_{0,2}Ga_{0,85}Mg_{0,15}O₂ und CeO₂ verwendet) eine unterschiedliche Schichtdicke zweckmäßig ist. Bei La_{0,8}Sr_{0,2}Ga_{0,85}Mg_{0,15}O₂ wurde eine Schichtdicke von 80µm angewandt, bei CeO₂ eine Schichtdicke von 200 µm. Diese Folie wird 6 Stunden bei einer Temperatur von 1500 °C (bei La_{0,8}Sr_{0,2}Ga_{0,85}Mg_{0,15}O₂) bzw. 1300 °C und 8 Stunden (bei CeO₂) gesintert (eingelegt zwischen zwei porösen Aluminiumoxid-Platten).

### Schritt b): Herstellung der Kathode

ba) Als Kathode wird eine Platin-Schicht auf den Elektrolyten aufgedampft;
bb) oder es wird eine kathodische Schicht, wie unter c) detailliert beschrieben, hergestellt. Die Zusammenssetzung des kathodischen Pulvers ist hierbei La _{0,6} Sr _{0,4} Fe _{0,8} Co _{0,2} O ₃ (Rhône Poulenc). Die Sinterbedingungen sind in diesem Fall 1 Stunde bei 1100 °C.

### Schritt c): Herstellung der Anode/katalytischen Schicht

Die Elemente, außer Molybdän, werden in Form ihrer Nitratsalze (Fa. Merck) entsprechend den gewünschten molaren Verhältnissen unter Rühren in einem VA-Flügelrührer in warmem Wasser bei ca. 50 °C gelöst. Molybdän wird zunächst als Ammoniumheptamolybdat-4-hydrat (NH₄)₆ Mo₇O₂₄ x 4 H₂O (z. B. von H. C. Starck) separat gelöst.

Die molaren Verhältnisse der Elemente zueinander ergeben sich z. B. aus der Tabelle der Beispiele 1 bis 4 bzw. aus der Formel I.

Die Ammoniumheptamolybdat-Lösung wird entsprechend dem gewünschten molaren Verhältnis unter Rühren in die vorgelegte Nitratsalzlösung geschüttet. Es entsteht ein Fällprodukt, dass sich bei fortgesetztem Rühren wieder auflöst und nach kurzer Zeit geliert.

Das Gel wird anschließend bei 110 °C im Luftstrom getrocknet, dann bei 450 °C calciniert.

Das so erhaltene Material wird abschließend gemahlen. Das resultierende Pulver kann direkt zur Herstellung der katalytischen Paste eingesetzt werden.

Die gewünschten katalytisch wirkenden Verbindungen werden mit Bindemittel und Lösemittel mit einer Kugelmühle bzw. einer Perlmühle zu einer Paste verarbeitet. Diese Paste wird auf den Elektrolyten siebgedruckt. Nach Abziehen bzw. Verdunsten des Lösemittels wird die gesamte Zelle bei einer Temperatur von 400 °C gesintert. Es resultiert eine katalytisch wirkende Schicht von 50 µm Schichtdicke. Im Einzelnen wird hierbei wie folgt verfahren:

Die katalytisch wirkende Paste wird grundsätzlich durch mechanisches Vermischen (Rührer) des Katalysatorpulvers, also z.B. des Mischmetalloxidpulvers, des Zeolithen und gegebenenfalls Zusätzen, mit einem Träger auf Cellulosebasis hergestellt.

Der Träger wird durch Mischen (20 Minuten mit einem Propellerrührer) von 16 g Ethylcellulose (Fa. Merck) in 422 g Terpineol (p-Menth-1-en-8-ol) hergestellt. 32 g Katalysator und gegebenenfalls Zusätze, die die Leitfähigkeit erhöhen, werden zunächst in 22 g Träger mit einem Spatel eingemischt. Das weitere Mischen geschieht mit einem Dreiwalzenstuhl (Fa. Netzsch). Diese Paste wird in einer 50 ml Flasche aufgesammelt.

Diese Paste wird auf der Elektrolytschicht mit einem Siebdruckgerät (Fa. DEK) und einem Sieb der Lochung 53 gedruckt. Schließlich wird die katalytisch wirkende Schicht eine Stunde bei 400 °C gesintert.

Die eingesetzten Materialien sind den folgenden Beispielen zu entnehmen.

### 1. Katalytische Oxidation von Benzol (Vergleichsbeispiel)

Verschiedene poröse katalytische Filme mit einer BET-Oberfläche von 16 m²/g werden durch Siebdrucktechnik und anschliessendes Tempern auf eine 200 µm Elektrolytfolie aus CeO₂, aufgebracht (siehe folgende Tabelle). Als Gegenelektrode wird Pt aufgedampft. Die Reaktionstemperatur beträgt 450 °C. Eine Mischung aus 5 % Benzol, 5 % Sauerstoff und 90 % Stickstoff wird mit 2 l/h über die Anode geleitet. Luft mit der gleichen Rate wird über die Kathode geleitet. Die Umsetzung erfolgt stromlos. Ein 02-Transfer von der Kathode zur Anode wird weitgehend unterbunden bzw. ist nicht feststellbar.

| **Ergebnisse:** | |
|---|---|
| **Anodenmaterial (katalytischer Film)** | **Phenolbildung [mmol/h*g]** |
| MoO₃ | 0 |
| Mo _{9,57} Bi _{0,86} Fe _{6,4} Co _{3,2} K _{0,05} Oxid | 0 |
| Mo ₁₂ Bi _{0,5} Fe ₄ Co ₈ Ca _{0,1} K _{0,1} Oxid plus 10 Gew.-% CeO₂ plus 30 Gew.-% Zeolith ZSM-5 | 0 |
| Mo ₁₂ Bi ₅ Fe ₄ Co ₈ Ca _{0,1} K _{0,1} Oxid plus 40 Gew.-% Zeolith ZSM-5 | 0 |

### 2. Elektrokatalytische Oxidation von Benzol (erfindungsgemäß)

Verschiedene poröse katalytische Filme (siehe folgende Tabelle) mit einer BET-Oberfläche von 16 m²/g werden durch Siebdrucktechnik und anschliessendes Tempern auf eine 200 µm Elektrolytfolie aus CeO₂ aufgebracht. Als Gegenelektrode wird Pt aufgedampft. Die Reaktionstemperatur beträgt 450 °C. Eine Mischung aus 5 % Benzol, 5 % Sauerstoff und 90 % Stickstoff wird mit 2 l/h über die Anode geleitet. Luft mit der gleichen Rate wird über die Kathode geleitet. Die angelegte Spannung zur Kontrolle des Sauerstoffionenflusses beträgt 1 V.

| **Ergebnisse:** | |
|---|---|
| **Anodenmaterial (katalytischer Film)** | **Phenolbildung [mmol/h*g]** |
| MoO₃ | 0 |
| Mo _{9,57} Bi _{0,86} Fe _{6,4} Co _{3,2} K _{0,05} Oxid | 0 |
| Mo ₁₂ Bi _{0,5} Fe ₄ Co ₈ Ca _{0,1} K _{0,1} Oxid plus 10 Gew.-% CeO₂ plus 30 Gew.-% Zeolith ZSM-5 | 0.35 |
| Mo ₁₂ Bi ₅ Fe ₄ Co ₈ Ca _{0,1} K _{0,1} Oxid plus 40 Gew.-% Zeolith ZSM-5 | 0,20 |

### 3. Katalytische Oxidation von Benzol mit Distickstoffmonoxid im Eduktstrom (Vergleichsbeispiel)

Verschiedene poröse katalytische Filme (siehe folgende Tabelle) mit einer BET-Oberfläche von 18 m²/g werden durch Siebdrucktechnik und anschliessendes Tempern auf eine 80 µm Elektrolytfolie aus La_{0,8}Sr_{0,2}Ga_{0,85}Mg_{0,15}O₂, aufgebracht. Als Gegenelektrode wird Pt aufgedampft. Die Reaktionstemperatur beträgt 395 °C. Eine Mischung aus 5 % Benzol, 5 % Sauerstoff, 3 % Distickstoffmoxid und 87 % Stickstoff wird mit 2 l/h über die Anode geleitet. Luft mit der gleichen Rate wird über die Kathode geleitet. Die Umsetzung erfolgt stromlos. Ein O₂-Transfer von der Kathode zur Anode wird weitgehend unterbunden bzw. ist nicht feststellbar.

| **Ergebnisse:** | |
|---|---|
| **Anodenmaterial (katalytischer Film)** | **Phenolbildung [mmol/h*g]** |
| MoO₃ | 0 |
| Mo _{9,57} Bi _{0,86} Fe _{6,4} Co _{3,2} K _{0,05} Oxid | 0 |
| Mo ₁₂ Bi _{0,5} Fe ₄ Co ₈ Ca _{0,1} K _{0,1} Oxid plus 10 Gew.-% CeO₂ plus 30 Gew.-% Zeolith ZSM-5 | 0.05 |
| Mo ₁₂ Bi ₅ Fe ₄ Co ₈ Ca _{0,1} K _{0,1} Oxid plus 40 Gew.-% Zeolith ZSM-5 | 0,10 |

### 4. Elektrokatalytische Oxidation von Benzol mit Distickstoffmonoxid im Eduktstrom (erfindungsgemäß)

Verschiedene poröse katalytische Filme (siehe folgende Tabelle) mit einer BET-Oberfläche von 18 m²/g werden durch Siebdrucktechnik und anschliessendes Tempern auf eine 80 µm Elektrolytfolie aus La_{0,8}Sr_{0,2}Ga_{0,85}Mg_{0,15}O₂, aufgebracht. Als Gegenelektrode wird Pt aufgedampft. Die Reaktionstemperatur beträgt 395 °C. Eine Mischung aus 5 % Benzol, 5 % Sauerstoff, 3 % Distickstoffmonoxid und 87 % Stickstoff wird mit 2 l/h über die Anode geleitet. Luft mit der gleichen Rate wird über die Kathode geleitet. Die angelegte Spannung zur Kontrolle des Sauerstoffionenflusses beträgt 1 V.

| **Ergebnisse:** | |
|---|---|
| **Anodenmaterial (katalytischer Film)** | **Phenolbildung [mmol/h*g]** |
| MoO₃ | 0 |
| Mo _{9,57} Bi _{0,86} Fe _{6,4} Co _{3,2} K _{0,05} Oxid | 0 |
| Mo ₁₂ Bi _{0,5} Fe ₄ Co ₈ Ca _{0,1} K _{0,1} Oxid plus 10 Gew.-% CeO₂ plus 30 Gew.-% Zeolith ZSM-5 | 2.10 |
| Mo ₁₂ Bi ₅ Fe ₄ Co ₈ Ca _{0,1} K _{0,1} Oxid plus 40 Gew.-% Zeolith ZSM-5 | 0,95 |

## Patentansprüche

1. Elektrochemische Zelle, bestehend aus einer Kathode, einem Sauerstoffionen leitenden Festelektrolyt und einer Anode,
**dadurch gekennzeichnet,**
**dass** die Anode eine Beschichtung aus Zeolithen, Mordeniten, Silikaten, Phosphaten oder Mischmetalloxiden mit einer Porengröße unter 200 nm aufweist.

2. Elektrochemische Zelle nach Anspruch 1,
**dadurch gekennzeichnet,**
**dass** die Anodenbeschichtung aus einer Verbindung der Formel I
(El₂ Oₑ)_{α} (Fe₂O₃)_{β} SiO₂ (I)
mit
El = Element der 1., 2., 3., 4. oder 5. Hauptgruppe oder 3., 4., 5., 6., 7. oder 8. Nebengruppe des Periodensystems der Elemente
α = 0 bis 0.1
β = 0 bis 0.1
besteht, mit der Maßgabe, das α und β nicht gleichzeitig 0 sind.

3. Elektrochemische Zelle nach Anspruch 1 oder 2,
**dadurch gekennzeichnet,**
**dass** die Porengröße der Anodenbeschichtung unter 20 nm beträgt.

4. Elektrochemische Zelle nach Anspruch 1 bis 3,
**dadurch gekennzeichnet,**
**dass** der Sauerstoffionen leitende Festelektrolyt aus Ceroxid (CeO₂) oder mit Lanthanoxid (La₂O₃), Yttriumoxid (Y₂O₃), Ytterbiumoxid (Yb₂O₃) und/oder Gadoliniumoxid (Gd₂O₃) stabilisiertem Ceroxid (CeO₂) besteht.

5. Elektrochemische Zelle nach Anspruch 1 bis 3,
**dadurch gekennzeichnet,**
**dass** der Sauerstoffionen leitende Festelektrolyt aus Zirkonoxid (ZrO₂) oder mit Calciumoxid (CaO), Scandiumoxid (Sc₂O₃), Yttriumoxid (Y₂O₃) und/oder Ytterbiumoxid (Yb₂O₃) stabilisiertem Zirkonoxid (ZrO₂) besteht.

6. Elektrochemische Zelle nach einem der Ansprüche 1 bis 5,
**dadurch gekennzeichnet,**
**dass** der Sauerstoffionen leitende Festelektrolyt ein Metall oder Metalloxid enthält.

7. Elektrochemische Zelle nach einem der Ansprüchen 1 bis 6,
**dadurch gekennzeichnet,**
**dass** der Sauerstoffionen leitende Festelektrolyt ein Perowskit der allgemeinen Formel II
LnₐX¹ _{b}X² _{c}X³ _{d}Oₑ (II)
mit
Ln = La, Ce, Pr, Nd, Pm, Sm, Eu, Gd, Tb, Dy, Ho, Er, Tm, Yb und/oder Lu
X¹ = Ca, Sr, Ba, und/oder Mg
X² = Ga, Al, Mn, Ti, Nb, Y, W und/oder Zr
X³ = Fe, Co, Ni und/oder Cu
a = 0,1 bis 0,9,
b = 0,1 bis 0,9,
c = 0 bis 0,9,
d = 0 bis 0,9
mit der Maßgabe, dass a+b = 0,3 bis 1,5,
ist.

8. Elektrochemische Zelle nach einem der Ansprüche 1 bis 6,
**dadurch gekennzeichnet,**
**dass** der Sauerstoffionen leitender Feststoff eine Pyrochlorverbindung der allgemeinen Formel III
(Ln_{f}X⁴ _{g})₂(X⁵ ₕX⁶ ᵢ)₂Oₖ (III)
mit
Ln = La, Ce, Pr, Nd, Pm, Sm, Eu, Gd, Tb, Dy, Ho, Er, Tm, Yb und/oder Lu
X⁴ = Na, Mg, Ca und/oder Sr,
X⁵ = Ti, Nb, Ta und/oder Zr,
X⁶ = Fe, Al, Sc, Ga und/oder Y,
f = 0,2 bis 1,2,
g = 0 bis 0,8,
h = 0,2 bis 1,2
i = 0 bis 0,8,
ist.

9. Elektrochemische Zelle nach einem der Ansprüche 1 bis 8,
**dadurch gekennzeichnet,**
**dass** als Anodenmaterial ein Mischoxid der allgemeinen Formel IV
AₗBₘX⁷ ₙX⁸ ₒX⁹ ₚX¹⁰ _{q}X¹¹ ᵣX¹² ₛOₜ (IV)
mit
A, B: Element der 1., 2., und/oder 5. Hauptgruppe und/oder der 4., 5., 6., 7., 8. Nebengruppe des Periodensystems der Elemente
X⁷ = V, Nb, Cr, W, Ta, Ga, und/oder Ce
X⁸ = Li, Na, K, Rb, Cs, Be, Mg, Ca, Sr und/oder Ba,
X⁹ = La, Ce, Pr, Nd, Pm, Sm, Eu, Gd, Tb, Dy, Ho, Er, Tm, Yb, Lu, Cu, Ag, Au, Pd und/oder Pt,
X¹⁰ = Fe, Co, Ni und/oder Zn,
X¹¹ = Sn, Pb, Sb und/oder Te,
X¹² = Ti, Zr, Si und/oder Al, wobei
l = 0,001 bis 30,
m = 0,001 bis 20,
n = 0 bis 15,
o = 0,001 bis 10,
p = 0 bis 10
q =0 bis 40
r = 0 bis 10 und
s = 0 bis 80 mit der Maßgabe, dass 1+m ≥ 0,01 und 1+o ≥ 0,005,
ist.

10. Elektrochemische Zelle nach einem der Ansprüche 1 bis 9,
**dadurch gekennzeichnet,**
**dass** der Sauerstoffionen leitende Festelektrolyt mechanisch dem Anodenmaterial zugemischt wird.

11. Elektrochemische Zelle nach einem der Ansprüche 1 bis 9,
**dadurch gekennzeichnet,**
**dass** dem Anodenmaterial ein elektrisch leitfähiges Metall mechanisch zugemischt wird.

12. Elektrochemische Zelle nach einem der Ansprüche 1 bis 11,
**dadurch gekennzeichnet,**
**dass** sich zwischen Sauerstoffionen leitendenden Festelektrolyt und Anode eine Metallfolie mit einer Dicke von maximal 200 µm befindet.

13. Elektrochemische Zelle nach Anspruch 12,
**dadurch gekennzeichnet,**
**dass** die Metallfolie aus Cu, Au, Ag, Pt, Pd und/oder Ir oder aus einer Mischung dieser Metalle besteht.

14. Elektrochemische Zelle nach einem der Ansprüche 1 bis 13,
**dadurch gekennzeichnet,**
**dass** die Kathode ein Metall ist.

15. Elektrochemische Zelle nach Anspruch 14,
**dadurch gekennzeichnet,**
**dass** die Kathode aus Cu, Au, Ag, Pt, Pd, Ir oder eine Mischung dieser Metalle besteht.

16. Elektrochemische Zelle nach einem der Ansprüche 1 bis 13,
**dadurch gekennzeichnet,**
**dass** die Kathode aus einem oder mehreren Metalloxiden oder einem Metallmischoxid besteht.

17. Elektrochemische Zelle nach Anspruch 16,
**dadurch gekennzeichnet,**
**dass** die Kathode aus einem Perowskit der allgemeinen Formel V
LaᵤX¹³ ᵥX¹⁴ _{w}X¹⁵ ₓX¹⁶ _{y}O_{3±z} (V)
mit
X¹³ = Ce, Pr, Nd, Pm, Sm, Eu, Gd, Tb, Dy, Ho, Er, Tm, Yb und/oder Lu,
X¹⁴ = Ca, Sr, Ba und/oder Mg,
X¹⁵ = Mn, Fe, Ti, Ga, Mn und/oder Zr,
X¹⁶ = Co, Ni, Cu, Al und/oder Cr
u = 0 bis 1,2,
v = 0 bis 1,0,
w = 0,01 bis 0,8,
mit der Maßgabe, dass u+v+w ≤ 1,5
x = 0,2 bis 1,3,
y = 0 bis 0,9,
mit der Maßgabe, dass x+y ≥ 0,3
besteht.

18. Verfahren zur selektiven Oxidation von organischen Verbindungen,
**dadurch gekennzeichnet,**
**dass** die organischen Verbindungen an der Anodenseite einer elektrochemischen Zelle, bestehend aus einer Kathode, einem Sauerstoffionen leitenden Festelektrolyt und einer Anode, die eine Beschichtung aus Zeolithen, Mordeniten, Silikaten, Phosphaten oder Mischmetalloxiden mit einer Porengröße unter 200 nm aufweist, und an der Kathodenseite ein Sauerstoff- oder N₂O-haltiges Gas vorbeigeleitet werden.

19. Verfahren nach Anspruch 18,
**dadurch gekennzeichnet,**
**dass** die Anodenbeschichtung aus einer Verbindung der Formel I
(El₂ Oₑ)_{α} (Fe₂O₃)_{β} SiO₂ (I)
mit
El = Element der 1., 2., 3., 4. oder 5. Hauptgruppe oder 3., 4., 5., 6., 7. oder 8. Nebengruppe des Periodensystems der Elemente
α = 0 bis 0.1
β = 0 bis 0.1
mit der Maßgabe, dass α und β nicht gleichzeitig 0 sind,
besteht.

20. Verfahren nach Anspruch 18 oder 19,
**dadurch gekennzeichnet,**
**dass** die Porengröße der Anodenbeschichtung unter 20 nm beträgt.

21. Verfahren nach Anspruch 18 bis 20,
**dadurch gekennzeichnet,**
**dass** der Sauerstoffionen leitende Festelektrolyt aus Ceroxid (CeO₂) oder mit Lanthanoxid (La₂O₃), Yttriumoxid (Y₂O₃), Ytterbiumoxid (Yb₂O₃) und/oder Gadoliniumoxid (Gd₂O₃) stabilisiertem Ceroxid (CeO₂) besteht.

22. Verfahren nach Anspruch 18 bis 20,
**dadurch gekennzeichnet,**
**dass** der Sauerstoffionen leitende Festelektrolyt aus Zirkonoxid (ZrO₂) oder mit Calciumoxid (CaO), Scandiumoxid (Sc₂O₃), Yttriumoxid (Y₂O₃) und/oder Ytterbiumoxid (Yb₂O₃) stabilisiertem Zirkonoxid (ZrO₂) besteht.

23. Verfahren nach einem der Ansprüche 18 bis 22,
**dadurch gekennzeichnet,**
**dass** der Sauerstoffionen leitende Festelektrolyt ein Metall oder Metalloxid enthält.

24. Verfahren nach einem der Ansprüchen 18 bis 23,
**dadurch gekennzeichnet,**
**dass** der Sauerstoffionen leitende Festelektrolyt ein Perowskit der allgemeinen Formel II
LnₐX¹ _{b}X² _{c}X³ _{d}Oₑ (II)
mit
Ln = La, Ce, Pr, Nd, Pm, Sm, Eu, Gd, Tb, Dy, Ho, Er, Tm, Yb und/oder Lu
X¹ = Ca, Sr, Ba, und/oder Mg
X² = Ga, Al, Mn, Ti, Nb, Y, W und/oder Zr
X³ = Fe, Co, Ni und/oder Cu
a = 0,1 bis 0,9,
b = 0,1 bis 0,9,
c = 0 bis 0,9,
d = 0 bis 0,9
mit der Maßgabe, dass a+b = 0,3 bis 1,5,
ist.

25. Verfahren nach einem der Ansprüche 18 bis 23,
**dadurch gekennzeichnet,**
**dass** der Sauerstoffionen leitende Feststoff eine Pyrochlorverbindung der allgemeinen Formel III
(Ln_{f}X⁴ _{g})₂(X⁵ ₕX⁶ ᵢ)₂Oₖ (III)
mit
Ln = La, Ce, Pr, Nd, Pm, Sm, Eu, Gd, Tb, Dy, Ho, Er, Tm, Yb und/oder Lu
X⁴ = Na, Mg, Ca und/oder Sr,
X⁵ = Ti, Nb, Ta und/oder Zr,
X⁶ = Fe, Al, Sc, Ga und/oder Y,
f = 0,2 bis 1,2,
g = 0 bis 0,8,
h = 0,2 bis 1,2
i = 0 bis 0,8,
ist.

26. Verfahren nach einem der Ansprüche 18 bis 25,
**dadurch gekennzeichnet,**
**dass** als Anodenmaterial ein Mischoxid der allgemeinen Formel IV
AₗBₘX⁷ ₙX⁸ ₒX⁹ ₚX¹⁰ _{q}X¹¹ ᵣX¹² ₛOₜ (IV)
mit
A, B: Element der 1., 2., und/oder 5. Hauptgruppe und/oder der 4., 5., 6., 7., 8. Nebengruppe des Periodensystems der Elemente
X⁷ = V, Nb, Cr, W, Ta, Ga, und/oder Ce
X⁸ = Li, Na, K, Rb, Cs, Be, Mg, Ca, Sr und/oder Ba,
X⁹ = La, Ce, Pr, Nd, Pm, Sm, Eu, Gd, Tb, Dy, Ho, Er, Tm, Yb, Lu, Cu, Ag, Au, Pd und/oder Pt,
X¹⁰ = Fe, Co, Ni und/oder Zn,
X¹¹ = Sn, Pb, Sb und/oder Te,
X¹² = Ti, Zr, Si und/oder Al, wobei
l = 0,001 bis 30,
m = 0,001 bis 20,
n = 0 bis 15,
o = 0,001 bis 10,
p = 0 bis 10
q = 0 bis 40
r = 0 bis 10 und
s = 0 bis 80 mit der Maßgabe, dass 1+m ≥ 0,01 und 1+o ≥ 0,005,
ist.

27. Verfahren nach einem der Ansprüche 18 bis 26,
**dadurch gekennzeichnet,**
**dass** der Sauerstoffionen leitende Festelektrolyt mechanisch dem Anodenmaterial zugemischt wird.

28. Verfahren nach einem der Ansprüche 18 bis 27,
**dadurch gekennzeichnet,**
**dass** dem Anodenmaterial ein elektrisch leitfähiges Metall mechanisch zugemischt wird.

29. Verfahren nach einem der Ansprüche 18 bis 28,
**dadurch gekennzeichnet,**
**dass** sich zwischen Sauerstoffionen leitendendem Festelektrolyt und Anode eine Metallfolie mit einer Dicke von maximal 200 µm befindet.

30. Verfahren nach Anspruch 29,
**dadurch gekennzeichnet,**
**dass** die Metallfolie aus Cu, Au, Ag, Pt, Pd und/oder Ir oder aus einer Mischung dieser Metalle besteht.

31. Verfahren nach einem der Ansprüche 18 bis 30,
**dadurch gekennzeichnet,**
**dass** die Kathode ein Metall ist.

32. Verfahren nach Anspruch 31,
**dadurch gekennzeichnet,**
**dass** die Kathode aus Cu, Au, Ag, Pt, Pd, Ir oder eine Mischung dieser Metalle besteht.

33. Verfahren nach einem der Ansprüche 18 bis 30,
**dadurch gekennzeichnet,**
**dass** die Kathode aus einem oder mehreren Metalloxiden oder einem Metallmischoxid besteht.

34. Verfahren nach Anspruch 33,
**dadurch gekennzeichnet,**
**dass** die Kathode aus einem Perowskit der allgemeinen Formel V
LaᵤX¹³ ᵥX¹⁴ _{w}X¹⁵ ₓX¹⁶ _{y}O_{3±z} (V)
mit
X¹³ = Ce, Pr, Nd, Pm, Sm, Eu, Gd, Tb, Dy, Ho, Er, Tm, Yb und/oder Lu,
X¹⁴ = Ca, Sr, Ba und/oder Mg,
X¹⁵ = Mn, Fe, Ti, Ga, Mn und/oder Zr,
X¹⁶ = Co, Ni, Cu, Al und/oder Cr
u = 0 bis 1,2,
v = 0 bis 1,0,
w = 0,01 bis 0,8,
mit der Maßgabe, dass u+v+w ≤ 1,5
x = 0,2 bis 1,3,
y = 0 bis 0,9,
mit der Maßgabe, dass x+y ≥ 0,3
besteht.
